(19)

**Europäisches Patentamt**
**European Patent Office**
**Office européen des brevets**

(11)  **EP 2 029 846 B1**

(12)  **EUROPEAN PATENT SPECIFICATION**

(45) Date of publication and mention
of the grant of the patent:
**23.12.2015 Bulletin 2015/52**

(51) Int Cl.:
***E06B 1/60*** *(2006.01)*     ***F16B 5/02*** *(2006.01)*

(21) Application number: **07748494.7**

(86) International application number:
**PCT/SE2007/050333**

(22) Date of filing: **15.05.2007**

(87) International publication number:
**WO 2007/145580 (21.12.2007 Gazette 2007/51)**

(54) **Fastener for fixing a door or window frame to the border of an opening in a building**

Befestigungselement zum Anbringen eines Tür- oder Fensterrahmens an einer Gebäudeöffnung

Élément de fixation pour fixer le cadre d'une porte ou fenêtre dans une ouverture de bâtiment

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **12.06.2006 SE 0601311**

(43) Date of publication of application:
**04.03.2009 Bulletin 2009/10**

(73) Proprietor: **Jeld-Wen Sverige AB**
**265 81 Åstorp (SE)**

(72) Inventor: **BRESMAN, Jonas**
**260 60 Kvidinge (SE)**

(74) Representative: **Zacco Sweden AB**
**P.O. Box 5581**
**114 85 Stockholm (SE)**

(56) References cited:
**WO-A1-90/04695**     **GB-A- 2 123 513**
**SE-B- 431 668**     **SE-C- 188 650**

**Description**

TECHNICAL FIELD

The invention relates to a frame fixing comprising a cylindrical unit with a threaded outer casing designed with a bore that passes through in an axial direction and comprises a first section designed with a cross section in a radial direction that is suitable for the insertion of a tool that is intended to rotate the cylindrical unit. The frame fixing comprises a fixing device that can be inserted into the bore.

BACKGROUND ART

Doors and windows comprise a frame that surrounds a main part. The main part can consist of a pivoting unit such as a door or a window, both of which are attached to one side of the frame in such a way that they can pivot. In addition, in the case of a window, the main part can consist of a fixed glazed unit.

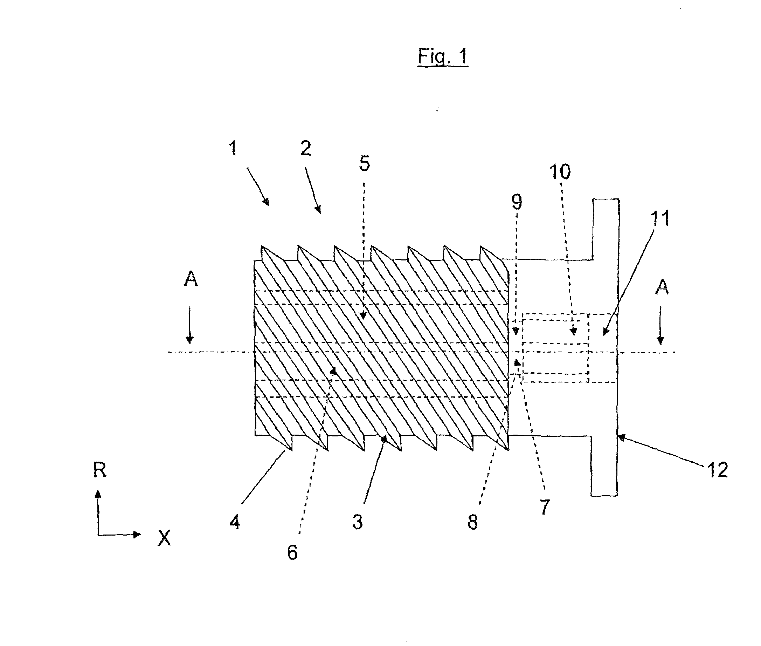

For the installation of doors and windows in a building, the use of frame fixings for attaching the frame to the building is already known. The frame fixing comprises a casing in the form of a cylindrical unit with a threaded outer casing, and a fixing device in the form of a bolt. The attached Figures 1-4 show a previously-known frame fixing and the description below can be read with reference to these figures.

The cylindrical unit is designed with a bore that passes through in an axial direction. A first section of the bore is designed with a cross section in a radial direction that is suitable for the insertion of a tool, and can consist, for example, of a triangular, four-sided, five-sided, hexagonal or other suitable shape that provides a good engagement between the tool and the bore. In addition, in the bore there is a flange comprising a specially designed matching-fit section. The matching-fit section is intended to receive a tool with a corresponding shape as the matching-fit section, for example a triangular, four-sided, five-sided, hexagonal or other suitable shape that provides a good engagement between the tool and the matching-fit section. The bolt comprised in the frame fixing is designed to be fastened into the building in such a way that it creates a fixing between the frame and the building. The bolt fits into the bore in such a way that the head of the bolt and a part of the fixing device that extends from the head are hidden in the bore, while the remaining part of the bolt protrudes out from the cylindrical unit 3 and is intended to be fixed into the fabric of the building. During installation of the frame, the head of the bolt is intended to make contact with the flange by means of the pressure when the bolt is screwed into the building as described below.

During the installation of doors and windows, the following elements are carried out:

- A hole is pre-drilled in the frame, into which the cylindrical unit is screwed via the external threads and by means of the tool that is arranged in the matching-fit section. The cylindrical unit is screwed into the hole in such a way that essentially the whole cylindrical unit is hidden in the hole.

- The frame is placed in an opening that is arranged in the fabric of a building, whereupon the bolt is inserted into the bore from the inside of the frame, that is from the side of the frame towards which the door/window will face.

- Thereafter, the fixing device is screwed into the fabric of the building.

According to a known model of the frame fixing, the installation of the frame fixing has been completed when the bolt has been screwed into the fabric of the building, but according to another model, one step remains, namely:

- The cylindrical unit is partially screwed out from the frame by means of a tool that is inserted into the bore from the inside of the frame, until the cylindrical unit is in contact with the fabric of the building and exerts a pressure on the fabric of the building from the frame. By adjusting the pressure, the position of the frame can be adjusted in relation to the fabric of the building. If the cylindrical unit has essentially changed position, the fixing device may need to be screwed in further in order for a tension fixing to be achieved between the frame fixing (and hence the frame) and the fabric of the building.

Both the models described above have been available on the market for over 50 years and for all this time have been associated with a well-known problem. The problem is that the frame can move in relation to the fabric of the building after installation. In the case of an opening door or an opening window, the tolerances are small between the frame and the pivoting unit, so that only a small displacement of the frame is sufficient to give certain parts of the pivoting unit a negative clearance in relation to the frame. When such a situation arises, the frame must be adjusted in order for a positive clearance to be obtained once again. It has been known for a long time that such adjustments are necessary over a period of time "until the door has settled".

GB 2 123 513 A discloses a frame sleeve for attaching window and door frames in openings.

The problem described above has thus been known for a long time, and hence it has been recognized for a long time that there is a need for an improved device and an improved method for the installation of doors and windows, in particular when the door/window comprises a pivoting unit.

DISCLOSURE OF INVENTION

The present invention is intended to solve the problem described above, by means of a frame fixing comprising a cylindrical unit with a threaded outer casing according to the present claim 1.

The cylindrical unit is designed with a bore that passes through in an axial direction. The bore comprises a first section designed with a cross section in a radial direction that is suitable for the insertion of a tool that is intended to rotate the cylindrical unit. The cross section of the bore can consist, for example, of a triangular, four-sided, five-sided, hexagonal or other suitable shape that provides a good engagement between the tool and the bore. The frame fixing comprises a fixing device that can be inserted into the bore. By "can be inserted" is meant that the fixing device can move freely in the bore in an axial direction and that the cylindrical unit can be rotated around the fixing device when the fixing device is fixed in an external unit, for example the fabric of a building.

The invention is characterized in that the bore comprises a second section creating a controlling section for the fixing device. The fixing device is mounted in the controlling section in such a way that it can rotate and in such a way that the fixing device can be rotated by means of a tool when the frame fixing is being used. The controlling section has a cross section in a radial direction that is determined by the length of the controlling section in an axial direction in such a way that the controlling section limits the radial freedom of movement of the central axis of the fixing device in relation to the central axis of the controlling section to a movement of a predetermined maximal size at the end surface of the cylindrical unit.

An advantage of the invention is that the frame fixing makes possible a more robust fixing between the frame and the fabric of the building, with the abovementioned problems of the frame pivoting having been eliminated or at least having been reduced significantly.

The movement of the fixing device consists of two possible directions of movement. The first direction of movement consists of a translatory movement in a radial direction (below called the radial freedom of movement) in which the whole fixing device has a parallel movement. The second direction of movement consists of the fixing device being able to pivot within the controlling section (below called the pivoting freedom of movement)

The radial freedom of movement, Rradial, of the fixing device is limited to a movement of a maximum of 0.5 mm from the central axis of the fixing device to the central axis of the controlling section at the end surface of the cylindrical unit. This value is taken for a newly-fitted door in a frame with a gap between the door and the frame of approximately 2.5 mm. This value is thus not an absolute amount for the invention, but is rather intended to provide an expert in the field with an indication of the possibilities of the invention. A smaller or a larger value is thus possible and can be ensured by changing the diameter and length of the controlling section as described below.

The values given above are taken as examples of empirically determined values that give rise to a permitted pivoting of the door frame without the pivoting giving rise to so large a deviation that the door can not be opened and closed in an unobstructed way. The frame fixing according to the invention enables the pivoting of the frame to be minimized by increasing the length of the controlling section in an axial direction.

The pivoting freedom of movement of the fixing device is limited to an approximate maximal angle $\alpha$ = arctangens $(1/20) \approx 2.9^0$ of the central axis of the fixing device in relation to the central axis of the controlling section when Rradial is 0.5 mm and the controlling section is 2 cm long and extends all the way to the frame. Formulae for this calculation are to be found below.

There is a relationship between the radial freedom of movement, the length of the controlling section and the pivoting freedom of movement that will be described in greater detail below.

In order for the cylindrical unit to be able to be rotated around the fixing device, it is necessary for there to be a positive clearance between the fixing device and the controlling section, or at least a zero clearance.

The fixing device can consist of a bolt or a spike or the like. The bolt advantageously comprises a body in the form of a cylindrical part with a smooth outer surface that is designed to fit into the controlling section in such a way that the abovementioned limitation of the movement of the fixing device is achieved. A spike can also comprise a body in the form of such a cylindrical part, but the body can also have a number of grooves or the like, with the outer parts of the grooves, viewed in a radial direction, constituting contact surfaces within and against the controlling section.

According to a first embodiment of the invention, the bore comprises a flange creating the controlling section and a specially designed matching-fit section. The controlling section is here located between the first section and the matching-fit section. The matching-fit section is located between the controlling section and an end surface of the cylindrical unit. The end surface has an extent in a plane in a radial direction. The matching-fit section is intended to receive a tool with a corresponding shape as the matching-fit section, for example triangular, four-sided, five-sided, hexagonal or other suitable shape in order to obtain a good engagement between the tool and the matching-fit section.

According to a second embodiment of the invention, the bore comprises a flange creating only the controlling section. The controlling section is here located between the first section and the end surface of the cylindrical unit. The end surface advantageously comprises a peripheral part in the form of a flange designed to receive a tool with a corresponding shape as the peripheral part, for example triangular, four-sided, five-sided, hexagonal or other suitable shape in order to obtain a good engagement between the tool and the peripheral part upon rotation of the cylindrical unit. The end surface does not need to have such a peripheral part designed to receive a tool, but can comprise one or more recesses or the like designed for a tool with corresponding projecting parts intended to be used to rotate the cylindrical unit.

As mentioned above, the frame fixing is intended to be used when fitting a door or a window arrangement in a building. The arrangement comprises a frame that is intended to be fixed in the fabric of the building, after which the actual door or window is fitted in the frame. The cylindrical unit of the frame fixing is screwed into the frame from the outside of the frame, that is from the side of the frame that faces towards the fabric of the building, using a tool mounted in the matching-fit section or in the peripheral part or in some other suitable arrangement that fits the tool. Following this, the frame is positioned in an opening arranged in the fabric of the building, after which the fixing device is inserted into the bore from the inside of the frame, that is from the side of the frame that faces away from the fabric of the building. The fixing device is then secured in the building, whereby a fixing is created between the frame and the building. In addition, the cylindrical unit is screwed out from the frame in the direction towards the fabric of the building by means of a tool that is fitted in the first section. The cylindrical unit is screwed out from the frame until an end surface of the cylindrical unit is in contact with the fabric of the building, whereby the fixing between the frame and the fabric of the building is made stronger and, in addition, the distance between the frame and the fabric of the building is fixed. The fixing device is thereafter inserted yet further in the direction towards the fabric of the building until the head of the fixing device is in contact with the flange in the bore in such a way that the fixing device exerts a pulling force towards the flange in the direction towards the fabric of the building.

When the frame fixing has been screwed in place in the frame, the matching-fit section according to the first embodiment above is no longer necessary for the function of the frame fixing. In this embodiment, there are three alternatives for the invention. The first alternative is that the controlling section is of such a length and has such tolerances in relation to the body of the fixing device that the radial freedom of movement of the fixing device is limited according to the above. The second alternative is that the frame fixing comprises an adapter comprising an outer part with a shape that corresponds to the matching-fit section and an inner part with corresponding dimensions to the controlling section in the flange. The inner part of the adapter thus comprises a part of the controlling section of the frame fixing and thereby increases the length of the controlling section in an axial direction. An advantage of such an arrangement is that the tolerances of the controlling section in relation to the body of the fixing device can be increased, that is the clearance between the fixing device and the controlling section can be greater with increased length while maintaining the radial freedom of movement. The third alternative is that the adapter is designed to fit into both the matching-fit section and the controlling section. The inner part of the adapter thus comprises the whole controlling section of the frame fixing and can be adjusted. Increased tolerances enable a less expensive method to be used for manufacturing the frame fixing and, in addition, previously-known frame fixings can be converted to create a better and more robust frame fixing.

The adapter can be manufactured in plastic and/or metal and/or any other material that can be formed simply and inexpensively according to the above.

The reason that the tolerances can be increased is that the pivoting freedom of movement is reduced as the length of the controlling section is increased, according to the following formulae:

$L1$ = the length of the controlling section in an axial direction

$L2$ = the distance between the controlling section and the end surface of the cylindrical unit (including the controlling section)

$D1$ = the diameter of the controlling section

$L3$ = the length of the body in an axial direction along the central axis of the fixing device

$L4$ = the distance between the head of the fixing device and the end surface of the cylindrical unit (excluding the head) along the central axis of the fixing device when the head of the fixing device is in contact with the flange

$D2$ = the diameter of the body

$\alpha$ = the angle between the central axis of the fixing device and the central axis of the controlling arrangement

Rradial = the maximal radial movement of the central axis of the fixing device for given L1-L4, D1 and D2 in relation to the central axis of the cylindrical arrangement.

Rpivot = the maximal pivoting movement of the central axis of the fixing device for given L1-L4, D1 and D2 in relation to the central axis of the cylindrical arrangement

$$\text{Rradial} = (D1-D2)/2$$

$$\alpha = \text{arctangens} ((D1-D2)/L1)$$

$$\text{Rpivot} = L4 \times \text{tangens} (\alpha) \times 1/2$$

$$\text{Rpivot} = L4 \times (D1-D2)/L1 \times 1/2$$

It should be noted that for a pivoted fixing device, Rpivot according to the above is an approximation. L4 is measured when the central axis of the fixing device lies parallel to the central axis of the controlling arrangement. The point on the central axis of the fixing device that constitutes the measurement point for Rradial and Rpivot is taken in the plane that coincides with the end surface of the cylindrical unit. In the event of pivoting, the same measurement point will be located slightly inside the said plane and the distance from the measurement point to the plane constitutes the approximation. The approximation is valid for small values of $\alpha$.

L3 should always be equal to L1, or greater than L1, as, for example, a bolt with a smaller L3 would mean that the threaded section of the bolt, that could have a different diameter to the body, would be inside the controlling arrangement and could change the conditions governing the freedom of movement of the fixing device. For the same reason, L3 is always equal to or greater than L4.

L2 is always equal to or greater than L1, and the larger L2 is in relation to L1, the smaller is the length of the controlling section. The controlling section has a maximal length L1=L2 determined by the definition of L2.

According to the formulae above, it can be seen that, when L1 is increased, Rpivot and $\alpha$ are reduced, but that Rpivot increases as L4 is increased. In the first instance of the first embodiment, L1 and L3 must thus be determined by L4 in order that the maximal permitted value of Rpivot is not exceeded.

In the second and third instances of the first embodiment, and in the second embodiment, it is the case that L4 = L1 = L2 and L3 can be varied, but when L3 = L4, it is the case that Rpivot = Rradial. This does not affect the angle $\alpha$, but an increase in L1 reduces the angle $\alpha$ and reduces the possibility of incorrect positioning of the frame.

In the second and third alternatives of the first embodiment respectively, the inner part of the adapter and the controlling section, or only the inner part of the adapter, create a controlling section where L4 = L1 which, according to the above, means that Rpivot = Rradial with the advantages that have been discussed above.

According to an embodiment of the invention, the flange comprises a specially modified section, for example in the form of a cone, and the head of the fixing device comprises a corresponding part. The fixing device thus fits into the controlling section of the bore in such a way that the specially modified part of the head fits into the modified section of the flange and the body of the fixing device fits into the controlling section. An advantage of the embodiment is that the specially designed section of the flange forms a part of the controlling section and controls the specially designed part of the fixing device in such a way that the movement of the fixing device in relation to the cylindrical unit is minimized. This is due to the fact that, during installation of the frame, the head of the fixing device is in contact with the flange by means of the pressure when the fixing device is screwed into the building, as described below.

In an embodiment of the invention, the controlling section is arranged coaxially in relation to the bore. An advantage of this embodiment is that the cylindrical unit has the same centre of rotation as the fixing device, which means that the frame does not move during rotation of the cylindrical unit, when the cylindrical unit is screwed in the direction towards the fabric of the building.

BRIEF DESCRIPTION OF DRAWINGS

The invention will be described below in association with a number of drawings, in which:

Figure 1 shows schematically a casing of a frame fixing according to previously known technology;

Figure 2 shows schematically a cross section along the line A-A in Figure 1 of a casing of a frame fixing according to previously known technology;

Figure 3 shows schematically a frame fixing comprising a fixing device and a casing according to Figure 2;

Figure 4 shows schematically a frame fixing according to Figure 3 after installation;

Figure 5 shows schematically a casing of a frame fixing according to a first embodiment of the invention;

Figure 6 shows schematically a frame fixing comprising a fixing device and a casing according to Figure 5;

Figure 7 shows schematically a frame fixing according to Figure 6 after installation;

Figure 8 shows schematically a frame fixing comprising a fixing device and a casing according to a second embodiment of the invention, and

Figure 9 shows schematically a frame fixing comprising a fixing device and a casing according to a third embodiment of the invention.

MODES FOR CARRYING OUT THE INVENTION

Figure 1 shows schematically a casing 2 of a frame fixing 1 according to previously known technology. The casing is in the form of a cylindrical unit 3 with a threaded outer casing 4. The cylindrical unit 3 is designed with a bore 5 that passes through in an axial direction X. A first section 6 of the bore 5 is designed with a cross section in a radial direction R that is suitable for the insertion of a tool, and can consist, for example, of a triangular, four-sided, five-sided, hexagonal or other suitable shape that provides a good engagement between the tool and the first section 6. In a second section 7 in the bore 5, there is a flange 8 comprising a circular section that creates a controlling section 9 and a specially designed matching-fit section 10. The matching-fit section 10 is designed to receive a tool with a corresponding shape as the matching-fit section 10, for example triangular, four-sided, five-sided, hexagonal or other suitable shape that provides a good engagement between the tool and the matching-fit section 10.

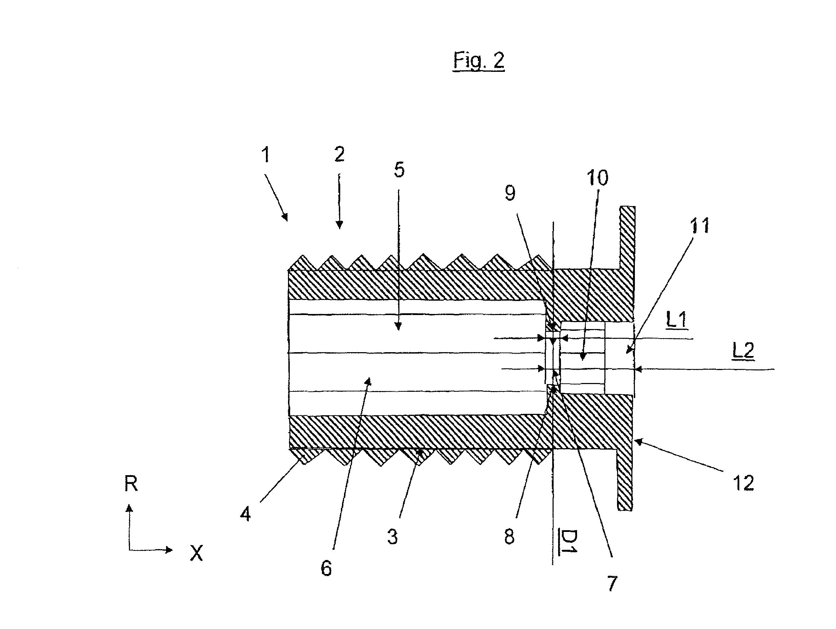

Figure 2 shows schematically a cross section along the line A-A in Figure 1 of a casing of a frame fixing according to previously known technology. Figure 2 shows that, after the matching-fit section 10, the bore 5 comprises a third section 11 with an essentially circular cross section. Figure 2 shows that L1 = the length of the controlling section 9 in an axial direction and L2 = the distance between the controlling section 9 and the end surface 12 of the cylindrical unit 3. L2 comprises the length L1 of the controlling section. D1 = the diameter of the controlling section 9.

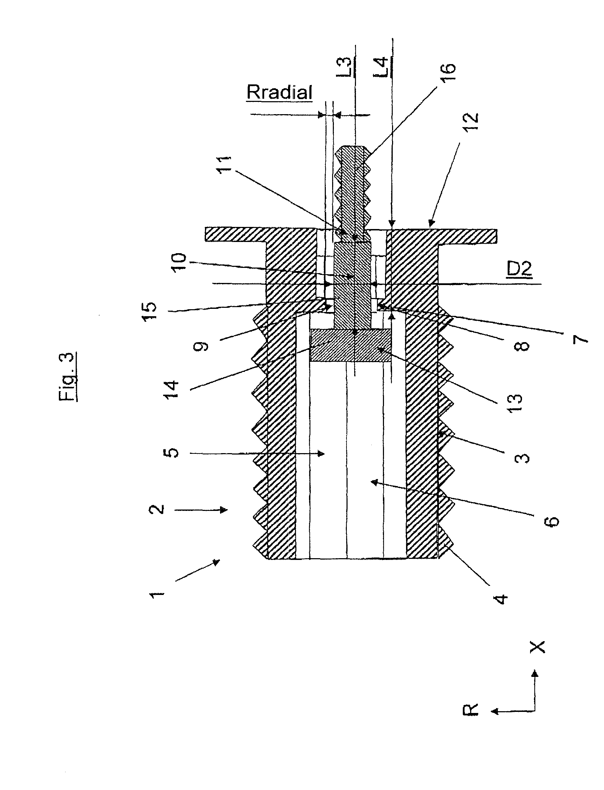

Figure 3 shows schematically a frame fixing comprising a fixing device 13 and a casing 2 according to Figure 2. The fixing device 13 can move freely in the bore 5, both in a rotational direction and in an axial direction X. The fixing device 13 comprises a head 14, a body 15 and a threaded part 16. L3 = the length of the body 15 in an axial direction along the central axis of the fixing device 13. L4 = the distance between the head 14 of the fixing device and the end surface 12 of the cylindrical unit 3 (excluding the head 14) along the central axis of the fixing device 13, when the head 14 of the fixing device 13 is in contact with the flange 8. D2 = the diameter of the body 15. Rradial = the maximal radial movement of the central axis of the fixing device 13 for given L1-L4, D1 and D2 in relation to the central axis of the cylindrical unit 3, when the fixing device 13 is moved parallel to the centre line of the bore 5 in a radial direction R.

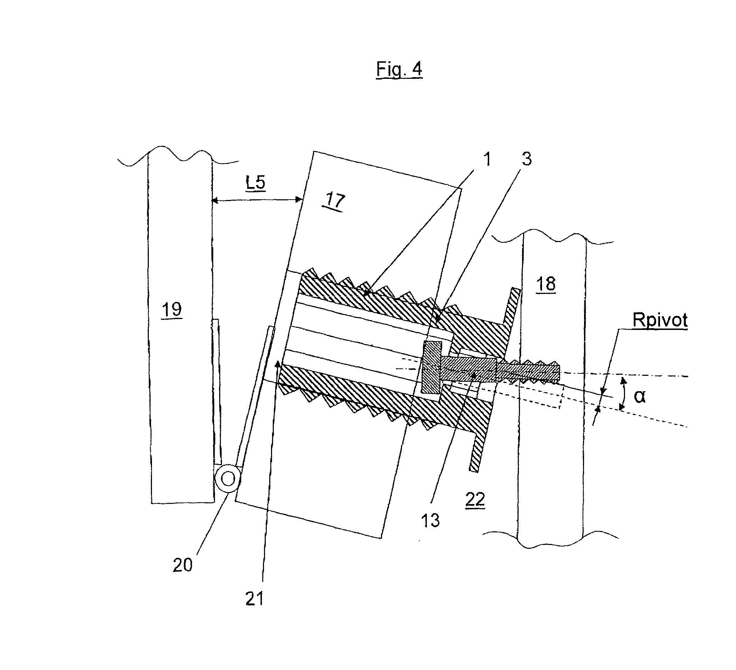

Figure 4 shows schematically a frame fixing 1 according to Figure 3 after installation in a frame 17 and a building 18. Figure 4 shows that a door 19 is attached to the frame by hinges 20. The fixing device 13 comprised in the frame fixing 1 is designed to be fixed into the building 18 and thereby create a fixing between the frame 17 and the building 18. The fixing device 13 is fitted into the bore 5 in such a way that the head 14 of the fixing device 13 and a part of the fixing device 13 that extends from the head 14 are hidden in the bore 5, but the larger part of the fixing device 13 protrudes from the cylindrical unit 3. The head 14 of the fixing device 13 is designed to make contact with the flange 8, during installation of the frame 17, by means of the pressure when the fixing device 13 is screwed into the building, as described below.

Figure 4 shows that a hole 21 has been made in the frame 17 into which the cylindrical unit 3 is screwed via the external threads 4 and using the tool that has been arranged in the matching-fit section 10 in the direction towards the door 19. The cylindrical unit 3 is initially screwed into the hole 21 in such a way that essentially the whole cylindrical unit 3 is hidden in the hole.

The frame 17 is thereafter arranged in an opening 22 arranged in the fabric of the building 18. The cylindrical unit 3 is thereafter screwed in the direction towards the fabric of the building 18 using a tool arranged in the first section 6 until the end surface 12 is in contact with the fabric of the building 18. The fixing device 13 is thereafter inserted into the bore from the inside of the frame 17, that is from the side of the frame 17 towards which the door 19 faces, after which the fixing device 19 is screwed into the fabric of the building 18 and creates a tension fixing between the frame fixing 1 (and thereby the frame) and the fabric of the building 18.

Figure 4 illustrates a well known problem, namely that the frame 17 can move in relation to the fabric of the building 18, as the fixing device 13 can move freely in a radial direction in relation to the cylindrical unit 3. The problems associated with such changes in position have already been discussed above.

Rpivot = the maximal pivoting movement of the central axis of the fixing device for given L1-L4, D1 and D2 in relation to the central axis of the cylindrical arrangement.

$$Rradial = (D1-D2)/2$$

$$\alpha = \text{arctangens }((D1-D2)/L1) = \text{the angle between the central axis of the}$$

$$\text{fixing device and the central axis of the controlling arrangement}$$

$$Rpivot = L4 \times \text{tangens }(\alpha) \times 1/2$$

$$Rpivot = L4 \times (D1-D2)/L1 \times 1/2$$

It should be noted that, for a pivoted fixing device, Rpivot according to the above is an approximation. L4 is then measured when the central axis of the fixing device lies parallel to the central axis of the controlling device. The point on the central axis of the fixing device that constitutes the measurement point for Rradial and Rpivot is taken in the plane that coincides with the end surface of the cylindrical unit. In the event of pivoting, the same measurement point will be located slightly inside the said plane and the distance from the measurement point to the plane constitutes the approximation. The approximation is valid for small values of $\alpha$.

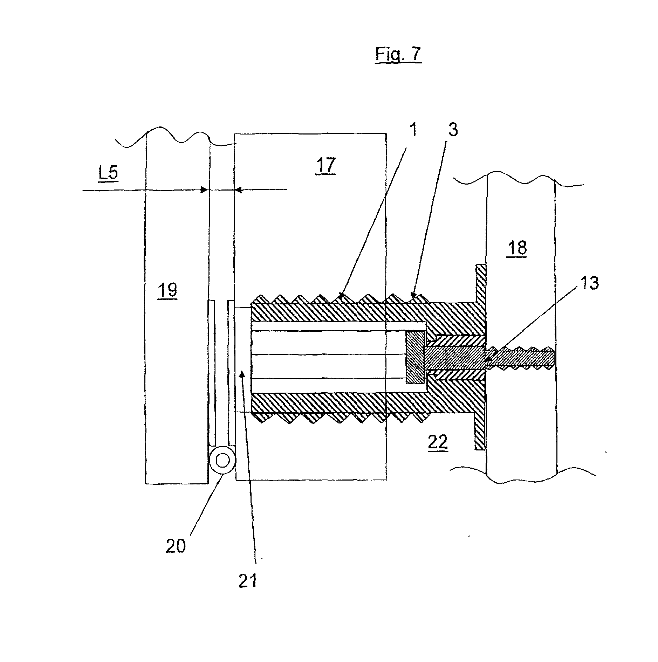

Figure 4 shows a length L5 that indicates an increase in the distance between the frame 17 and the door 19 on account of the frame having pivoted. The increase in the distance is comparable with the distance L5 between the frame 17 and the door 19 when the frame has not pivoted. The latter case is illustrated in Figure 7. The pivoting of the frame and the increase in L5 on the hinge side corresponds to a reduction in the distance between the frame 17 and the door 19 on the opposite side of the door. Figure 4 shows that L5 becomes smaller in the direction towards the hinges 20, which indicates a pivoting of the frame 17. If the frame had not pivoted, L5 would not have become smaller.

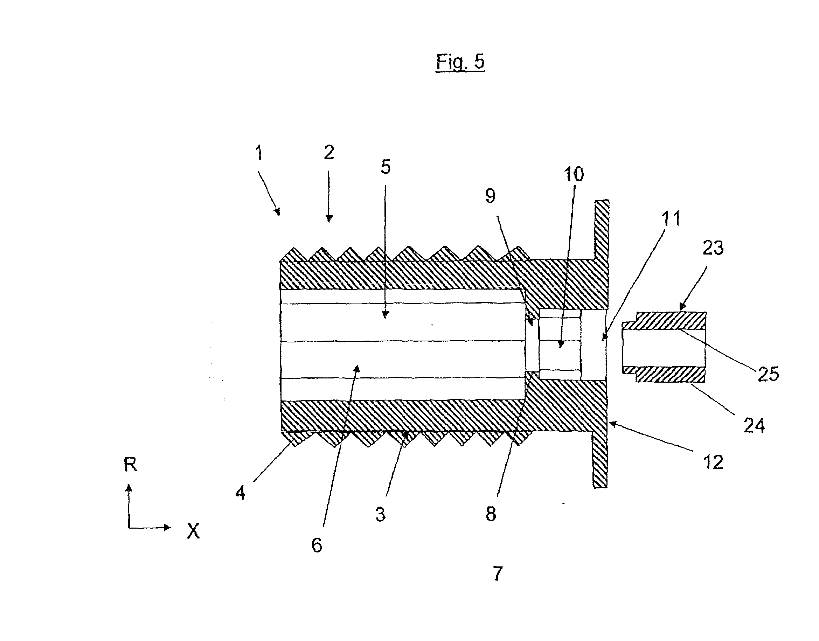

Figure 5 shows schematically a casing 2 of a frame fixing 1 according to a first embodiment of the invention. The frame fixing 1 comprises here an adapter 23 comprising an external part 24 with a shape that corresponds to the internal dimension of the matching-fit section 10 and the internal dimension of the third section 11, and an inner part 25 with an inner surface with corresponding dimensions to those of the inner surface of the controlling section 9 in the flange 8. The inner part 25 of the adapter 23 thus comprises a part of the controlling section 9 of the frame fixing 1 and thereby increases the length of the controlling section 9 in an axial direction. An advantage of such an arrangement is that the tolerances of the controlling section in relation to the body of the fixing device can be increased, that is the clearance between the fixing device and the controlling section can be greater with increased length, while maintaining radial freedom of movement.

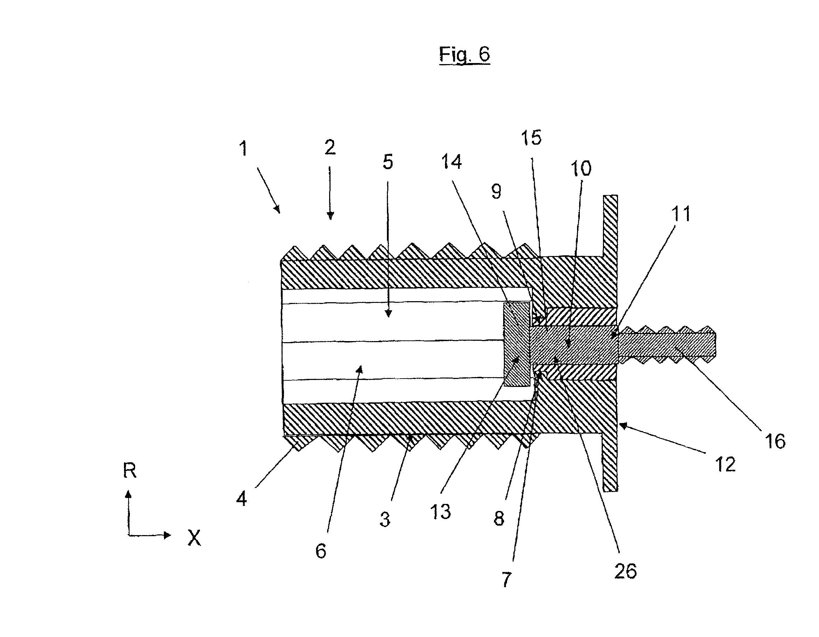

Figure 6 shows schematically a frame fixing 1 comprising a fixing device 13 and a casing 2 according to Figure 5. Figure 6 shows the adapter 23 fitted in the matching-fit section 10 and the fixing device 13 arranged in the casing 2 in the bore 26 that is created by the inner surface of the flange 8 and the inner surface of the adapter 25. The bore 26 that is created comprises the controlling section 9 of the frame fixing 1 according to the invention. Figure 6 shows that the body 15 of the fixing device 13 is the same length as the controlling section 9.

Figure 7 shows schematically a frame fixing according to Figure 6 after installation in a frame 17 and in the fabric of a building. A comparison is to be made here with the previously known frame fixing in Figure 4.

L3 should always be at least equal to L1 as, for example, a bolt with a smaller L3 would mean that the threaded section of the bolt, that can have a different diameter to that of the body 15, would be within the controlling arrangement 9 and could change the conditions governing the freedom of movement of the fixing device 13.

According to the formulae above, it can be seen that, when L1 increases, Rpivot and $\alpha$ decrease, but that Rpivot increases with the increase in L4. In the first instance of the first embodiment, L1 and L3 must thus be determined by L4 in order for the maximal permitted value of Rpivot not to be exceeded.

In Figure 7, it is the case that L1 = L2 = L3 = L4 which means that Rpivot = Rradial with the advantages that were discussed above. This does not affect the angle $\alpha$, but an increase in L1 reduces the angle $\alpha$ and reduces the possibility of incorrect positioning of the frame 17.

Figure 7 shows that L1 is of such a length and D1 and D2 are so determined in relation to each other that the frame 18 is not given any more room to pivot in such a way as is shown in Figure 4. Figure 7 also shows that L5 is essentially constant over the whole part that constitutes the space between the frame 17 and the door 19.

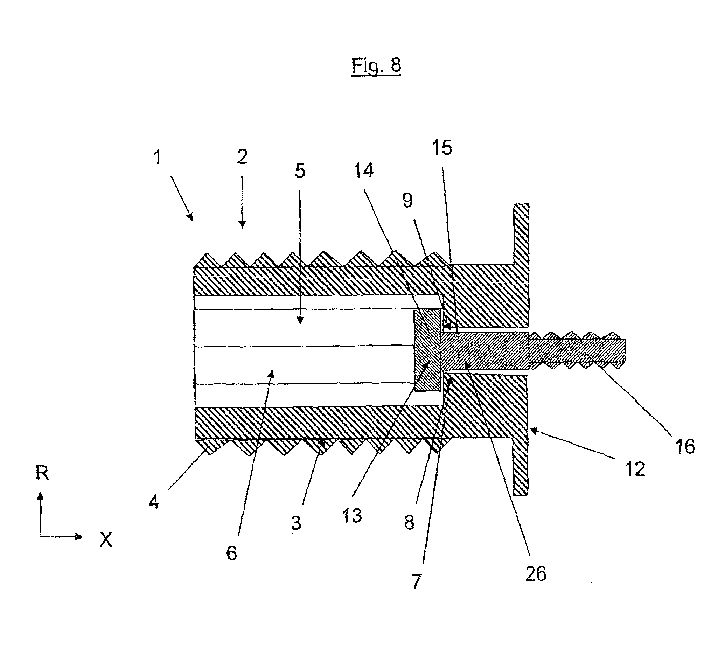

Figure 8 shows schematically a frame fixing 1 comprising a fixing device 13 and a casing 2 according to a second embodiment of the invention. The casing comprises here a flange 8 that extends the whole way to the end surface 12 of the cylindrical unit 3. The bore 26 that is created consists here of the inner surface of the flange 8. The bore 26 that is created corresponds to the controlling section 9 precisely as in Figure 6 and, in Figure 8, has such a length and such a tolerance in relation to the body 15 of the fixing device 13 that the radial freedom of movement Rradial of the fixing device 13 is limited in the same way as with the use of the adapter 23 in Figures 5-7.

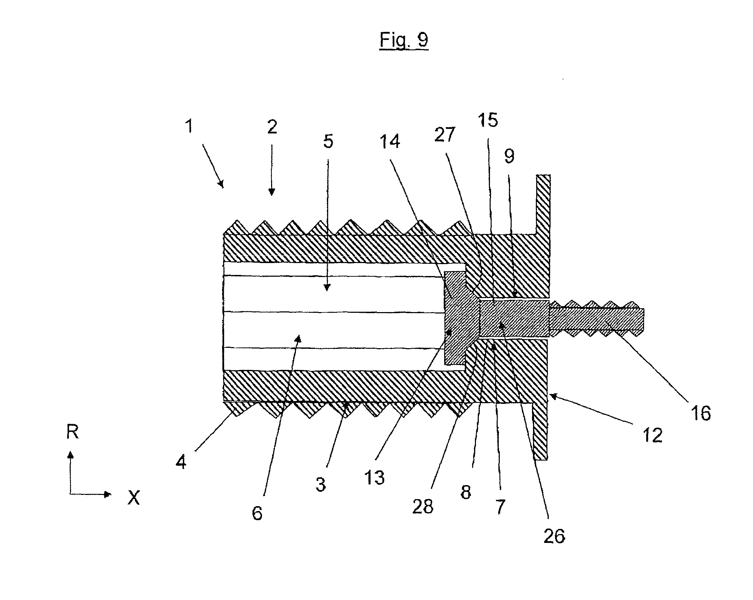

Figure 9 shows schematically a frame fixing 1 comprising a fixing device 13 and a casing 2 according to a third embodiment of the invention. Figure 9 shows that the flange 8 comprises a specially modified section 27 in the form of a cone, and the head 14 of the fixing device comprises a corresponding part 28. The fixing device 13 is thus fitted into the controlling section 9 in such a way that the specially modified part 28 of the head 14 is fitted into the modified section 27 of the flange 8 and the body 15 of the fixing device 13 is fitted into the controlling section 9. An advantage of the embodiment is that the specially designed section 27 of the flange 8 forms a part of the controlling section 9 and controls the specially designed part 28 of the fixing device 13 in such a way that the movement of the fixing device 13 in relation to the cylindrical unit 3 is minimized. This is due to the fact that, during installation of the frame 17, the head 14 of the fixing device is in contact with the flange 8 by means of the pressure when the fixing device is screwed into the building 18 as described above.

The invention is not limited to the embodiments described above, but can be varied within the framework of the attached claims. As an example, it can be mentioned that the adapter 23 can be designed to fit into both the matching-fit section and the controlling section. The inner part of the adapter thus constitutes the whole controlling section of the frame fixing and can be modified. Another example is that the adapter can comprise such a specially modified section as that described in association with Figure 9.

**Claims**

1.    Frame fixing (1) comprising a cylindrical unit (3) with a threaded outer casing (4) designed with a bore (5; 26) that passes through in an axial direction comprising a first section (6) designed with a cross section in a radial direction that is suitable for the insertion of a tool that is to rotate the cylindrical unit and a second section (7) comprising a flange (8) comprising a circular section that creates a controlling section (9), with the frame fixing (1) comprising a fixing device (13) that can be inserted into the bore (5; 26) and the controlling section (9), wherein the controlling section (9) has a cross section D1 (D1) in a radial direction that is determined by the length l_1 (L1) of the controlling section (9) in an axial direction in such a way that the controlling section (9) limits the radial freedom of movement of the central axis of the fixing device (13) in relation to the central axis of the controlling section (9) to a movement of a predetermined maximal size at the end surface of the cylindrical unit (3), **characterized in that** the radial freedom of movement (Rradial) of the fixing device (13) is less than or equal to 0.5 mm from the central axis of the fixing device (13) to the central axis of the controlling section (9) at the end surface of the cylindrical unit (3), where the radial freedom of movement is determined by the difference between the diameter of the controlling section (D1) and the diameter of the body of the fixing device (D2), when this difference is divided by 2.

2.    Frame fixing (1) according to Claim 1, **characterized in that** the cross section D1 (D1) of the controlling section (9) in a radial direction is determined by a cross section D2 (D2) of a body (15) of the fixing device (13) with a length L3 (L3).

3.    Frame fixing (1) according to Claim 1, **characterized in that** the bore (5) comprises a third section comprising a specially designed matching-fit section (10) located in a radial direction on the other side of the flange (8) in relation to the first section (6).

4.    Frame fixing (1) according to Claim 3, **characterized in that** the frame fixing (1) comprises an adapter (23) comprising an outer part (24) with a shape that corresponds to the inner dimensions of the matching-fit section (10) and an inner part (25) with an inner surface with corresponding dimensions to those of the inner surface of the controlling section (9) in the flange (8), with the inner part (25) of the adapter (23) comprising a part of the controlling section (9) and increasing the length of the controlling section (9) in an axial direction.

5. Frame fixing (1) according to Claim 1 or 2, **characterized in that** the flange (8) extends all the way to an end surface (12) of the cylindrical unit (3), and the inner surface of the flange (8) creates the controlling section (9).

6. Frame fixing (1) according to any one of the preceding claims, **characterized in that** the controlling section (9) and the body (15) are designed according to the following parameters and relationships: L1 = the length of the controlling section in an axial direction L2 = the distance between the controlling section and the end surface of the cylindrical unit (including the controlling section) D1 = the diameter of the controlling section L3 = the length of the body in an axial direction along the central axis of the fixing device L4 = the distance between the head of the fixing device and the end surface of the cylindrical unit (excluding the head) along the central axis of the fixing device when the head of the fixing device is in contact with the flange D2 = the diameter of the body a = the angle between the central axis of the fixing device and the central axis of the controlling arrangement Rradial = the maximal radial movement of the central axis of the fixing device for given L1-L4, D1 and D2 in relation to the central axis of the cylindrical arrangement Rpivot = the maximal pivoting movement of the central axis of the fixing device for given L1-L4, D1 and D2 in relation to the central axis of the cylindrical arrangement Rradial = (D1-D2)/2 a = arctangens ((D1-D2)/L1) Rpivot = L4xtangens (a)x1/2 Rpivot = L4x(D1-D2)/L1x1/2

7. Frame fixing (1) according to claim 6, **characterized in that** L2 greater than or equal to L1; L1 less than L3; and where L4 less than L3.

**Patentansprüche**

1. Rahmenbefestigungselement (1) umfassend eine zylindrische Einheit (3) mit einem äußeren Gewindemantel (4), der mit einer Bohrung (5; 26) ausgeformt ist, die in eine axiale Richtung durchgeht, umfassend einen ersten Abschnitt (6), der mit einem Querschnitt in einer radialen Richtung ausgeformt ist, welcher für die Einführung eines Werkzeugs geeignet ist, welches Werkzeug die zylindrische Einheit drehen soll, und einen zweiten Abschnitt (7) umfassend einen Flansch (8) umfassend einen kreisförmigen Abschnitt, der einen Steuerabschnitt (9) bildet, wobei das Rahmenbefestigungselement (1) eine Befestigungseinrichtung (13) umfasst, die in die Bohrung (5; 26) und in den Steuerabschnitt (9) eingeführt werden kann, wobei der Steuerabschnitt (9) in einer radialen Richtung einen Querschnitt D1 (D1) aufweist, der durch die Länge L1 (L1) des Steuerabschnitts (9) in einer axialen Richtung so festgelegt ist, dass der Steuerabschnitt (9) die radiale Bewegungsfreiheit der Mittelachse der Befestigungseinrichtung (13) im Verhältnis zur Mittelachse des Steuerabschnitts (9) auf eine Bewegung einer vorgegebenen Maximalgröße an der Endfläche der zylindrischen Einheit (3) begrenzt, **dadurch gekennzeichnet, dass** die radiale Bewegungsfreiheit (Rradial) der Befestigungseinrichtung (13) kleiner als oder gleich 0,5 mm von der Mittelachse der Befestigungseinrichtung (13) zur Mittelachse des Steuerabschnitts (9) an der Endfläche der zylindrischen Einheit (3) ist, wobei die radiale Bewegungsfreiheit durch den Unterschied zwischen dem Durchmesser des Steuerabschnitts (D1) und dem Durchmesser des Körpers der Befestigungseinrichtung (D2) festgelegt ist, wenn der Unterschied durch 2 geteilt wird.

2. Rahmenbefestigungselement (1) nach Anspruch 1, **dadurch gekennzeichnet, dass** der Querschnitt D1 (D1) des Steuerabschnitts (9) in einer radialen Richtung durch einen Querschnitt D2 (D2) eines Körpers (15) der Befestigungseinrichtung (13) mit einer Länge L3 (L3) festgelegt ist.

3. Rahmenbefestigungselement (1) nach Anspruch 1, **dadurch gekennzeichnet, dass** die Bohrung (5) einen dritten Abschnitt umfasst, umfassend einen sonderausgeformten passgenauen Abschnitt (10), der in einer radialen Richtung auf der anderen Seite des Flanschs (8) im Verhältnis zum ersten Abschnitt (6) angeordnet ist.

4. Rahmenbefestigungselement (1) nach Anspruch 3, **dadurch gekennzeichnet, dass** das Rahmenbefestigungselement (1) einen Adapter (23) umfasst, umfassend einen äußeren Teil (24) mit einer Form, die den inneren Abmessungen des passgenauen Abschnitts (10) entspricht, und einen inneren Teil (25) mit einer inneren Oberfläche mit Abmessungen, die den Abmessungen der inneren Oberfläche des Steuerabschnitts (9) im Flansch (8) entsprechen, wobei der innere Teil (25) des Adapters (23) einen Teil des Steuerabschnitts (9) umfasst und die Länge des Steuerabschnitts (9) in einer axialen Richtung vergrößert.

5. Rahmenbefestigungselement (1) nach Anspruch 1 oder 2, **dadurch gekennzeichnet, dass** sich der Flansch (8) bis zu einer Endfläche (12) der zylindrischen Einheit (3) erstreckt, und die innere Oberfläche des Flanschs (8) den Steuerabschnitt (9) bildet.

6. Rahmenbefestigungselement (1) nach einem der vorgehenden Ansprüche, **dadurch gekennzeichnet, dass** der Steuerabschnitt (9) und der Körper (15) gemäß den folgenden Parametern und Verhältnissen ausgeformt sind:

L1 = Länge des Steuerabschnitts in einer axialen Richtung
L2 = Abstand zwischen dem Steuerabschnitt und der Endfläche der zylindrischen Einheit (einschließlich des Steuerabschnitts)
D1 = Durchmesser des Steuerabschnitts
L3 = Länge des Körpers in einer axialen Richtung entlang der Mittelachse der Befestigungseinrichtung
L4 = Abstand zwischen dem Kopf der Befestigungseinrichtung und der Endfläche der zylindrischen Einheit (ausschließlich des Kopfs) entlang der Mittelachse der Befestigungseinrichtung, wenn der Kopf der Befestigungseinrichtung mit dem Flansch in Kontakt ist
D2 = Durchmesser des Körpers
$\alpha$ = Winkel zwischen der Mittelachse der Befestigungseinrichtung und der Mittelachse der Steueranordnung
Rradial = maximale radiale Bewegung der Mittelachse der Befestigungseinrichtung für gegebene L1-L4, D1 und D2 im Verhältnis zur Mittelachse der zylindrischen Anordnung
Rpivot = maximale Schwenkbewegung der Mittelachse der Befestigungseinrichtung für gegebene L1-L4, D1 und D2 im Verhältnis zur Mittelachse der zylindrischen Anordnung

$$Rradial = (D1-D2)/2$$

$$\alpha = \text{Arkustangens } ((D1-D2)/L1)$$

$$Rpivot = L4 \text{x Tangens } (\alpha) \text{x} 1/2$$

$$Rpivot = L4 \text{x}(D1-D2)/L1 \text{x} 1/2$$

**7.** Rahmenbefestigungselement (1) nach Anspruch 6, **dadurch gekennzeichnet, dass** L2 größer als oder gleich L1 ist; L1 weniger als L3 ist; und wobei L4 weniger als L3 ist.

## Revendications

**1.** Fixation de cadre (1) comprenant une unité cylindrique (3) avec une enveloppe externe filetée (4) conçue avec un alésage (5 ; 26) qui traverse dans une direction axiale, comprenant une première section (6) conçue avec une section transversale dans une direction radiale qui est appropriée pour l'insertion d'un outil qui sert à tourner l'unité cylindrique et une deuxième section (7) comprenant un rebord (8) comprenant une section circulaire qui crée une section de commande (9), la fixation de cadre (1) comprenant un dispositif de fixation (13) qui peut être inséré dans l'alésage (5 ; 26) et la section de commande (9), dans laquelle la section de commande (9) possède une section transversale D1 (D1) dans une direction radiale qui est déterminée par la longueur L1 (L1) de la section de commande (9) dans une direction axiale, d'une manière telle que la section de commande (9) limite la liberté radiale de mouvement de l'axe central du dispositif de fixation (13) par rapport à l'axe central de la section de commande (9) à un mouvement d'une ampleur maximale prédéterminée au niveau de la surface extrême de l'unité cylindrique (3), **caractérisée en ce que** la liberté radiale de mouvement (Rradial) du dispositif de fixation (13) est inférieure ou égale à 0,5 mm de l'axe central du dispositif de fixation (13) à l'axe central de la section de commande (9) au niveau de la surface extrême de l'unité cylindrique (3), où la liberté radiale de mouvement est déterminée par la différence entre le diamètre de la section de commande (D1) et le diamètre du corps du dispositif de fixation (D2), lorsque cette différence est divisée par 2.

**2.** Fixation de cadre (1) selon la revendication 1, **caractérisée en ce que** la section transversale D1 (D1) de la section de commande (9) dans une direction radiale est déterminée par une section transversale D2 (D2) d'un corps (15) du dispositif de fixation (13) avec une longueur L3 (L3).

**3.** Fixation de cadre (1) selon la revendication 1, **caractérisée en ce que** l'alésage (5) comprend une troisième section comprenant une section d'adaptation par correspondance spécialement conçue (10) située dans une direction radiale sur l'autre côté du rebord (8) par rapport à la première section (6).

**4.** Fixation de cadre (1) selon la revendication 3, **caractérisée en ce que** la fixation de cadre (1) comprend un adaptateur (23) comprenant une partie externe (24) dont la forme correspond aux dimensions intérieures de la section d'adaptation par correspondance (10) et une partie intérieure (25) avec une surface intérieure dont les dimensions correspondent à celles de la surface intérieure de la section de commande (9) dans le rebord (8), la partie intérieure (25) de l'adaptateur (23) comprenant une partie de la section de commande (9) et augmentant la longueur de la section de commande (9) dans une direction axiale.

**5.** Fixation de cadre (1) selon la revendication 1 ou 2, **caractérisée en ce que** le rebord (8) s'étend entièrement jusqu'à une surface extrême (12) de l'unité cylindrique (3) et la surface intérieure du rebord (8) crée la section de commande (9).

**6.** Fixation de cadre (1) selon l'une quelconque des revendications précédentes, **caractérisée en ce que** la section de commande (9) et le corps (15) sont conçus selon les paramètres et relations suivants : L1 = la longueur de la section de commande dans une direction axiale L2 = la distance entre la section de commande et la surface extrême de l'unité cylindrique (incluant la section de commande) D1 = le diamètre de la section de commande L3 = la longueur du corps dans une direction axiale le long de l'axe central du dispositif de fixation L4 = la distance entre la tête du dispositif de fixation et la surface extrême de l'unité cylindrique (à l'exception de la tête) le long de l'axe central du dispositif de fixation lorsque la tête du dispositif de fixation est en contact avec le rebord D2 = le diamètre du corps a = l'angle entre l'axe central du dispositif de fixation et l'axe central de l'agencement de commande Rradial = le mouvement radial maximal de l'axe central du dispositif de fixation pour des L1 à L4, D1 et D2 donnés par rapport à l'axe central de l'agencement cylindrique Rpivot = le mouvement pivotant maximal de l'axe central du dispositif de fixation pour des L1 à L4, D1 et D2 donnés, par rapport à l'axe central de l'agencement cylindrique Rradial = (D1-D2)/2 a= arctangente ((D1-D2)/L1) Rpivot = L4xtangente (a)x1/2 Rpivot = L4x(D1-D2)/L1x1/2

**7.** Fixation de cadre (1) selon la revendication 6, **caractérisée en ce que** L2 est supérieur ou égal à L1 ; L1 est inférieur à L3 ; et où L4 est inférieur à L3.

EP 2 029 846 B1

Fig. 1

Fig. 2

Fig. 3

EP 2 029 846 B1

Fig. 4

EP 2 029 846 B1

Fig. 5

Fig. 6

EP 2 029 846 B1

Fig. 7

Fig. 8

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2123513 A